# EUROPEAN PATENT APPLICATION

(11) **EP 4 425 832 A1**
(43) Date of publication of application: **04.09.2024**
(21) Application number: 24158548.8
(22) Date of filing: 20.02.2024
(51) Int. Cl.: H04L 9/40, H04W 12/72, H04W 12/71, H04W 12/40, H04W 12/06

(54) **VERIFICATION OF USER EQUIPMENT COMPLIANCE IN COMMUNICATION NETWORK ENVIRONMENT**

(30) Priority: 28.02.2023 US 202363448882 P
(71) Applicant: Nokia Technologies Oy, 02610 Espoo (FI)
(72) Inventor: P NAIR, Suresh, Estero (US); PEINADO GOMEZ, German, Warsaw (PL); BJERRUM, Bo Holm, Nibe (DK)
(74) Representative: Nokia EPO representatives

(57) **Abstract**

Techniques are disclosed for verifying user equipment compliance. For example, a method comprises computing, via user equipment, a secure identifier for the user equipment comprising an equipment identifier of the user equipment, and sending the secure identifier comprising the equipment identifier in a request message from the user equipment to a communication network to which the user equipment is attempting to connect. The communication network performs compliance verification for the user equipment based at least in part on the equipment identifier securely received from the user equipment.

## Description

### Field

The field relates generally to communication networks, and more particularly, but not exclusively, to security management in such communication networks.

### Background

This section introduces aspects that may be helpful in facilitating a better understanding of the inventions. Accordingly, the statements of this section are to be read in this light and are not to be understood as admissions about what is in the prior art or what is not in the prior art.

Fourth generation (4G) wireless mobile telecommunications technology, also known as Long Term Evolution (LTE) technology, was designed to provide high-capacity mobile multimedia with high data rates particularly for human interaction. Next generation or fifth generation (5G) technology is intended to be used not only for human interaction, but also for machine type communications in so-called Internet of Things (IoT) networks.

While 5G networks are intended to enable massive IoT services (e.g., very large numbers of limited capacity devices) and mission-critical IoT services (e.g., requiring high reliability), improvements over legacy mobile communication services are supported in the form of enhanced mobile broadband (eMBB) services providing improved wireless Internet access for mobile devices.

In an example communication system, user equipment (5G UE in a 5G network or, more broadly, a UE) such as a mobile terminal (subscriber) communicates over an air interface with a base station or access point of an access network referred to as a 5G AN in a 5G network. The access point (e.g., gNB) is illustratively part of an access network of the communication system.

For example, in a 5G network, the access network referred to as a 5G AN is described in 5G Technical Specification (TS) 23.501, entitled "Technical Specification Group Services and System Aspects; System Architecture for the 5G System," and TS 23.502, entitled "Technical Specification Group Services and System Aspects; Procedures for the 5G System (5GS)," the disclosures of which are incorporated by reference herein in their entireties. In general, the access point (e.g., gNB) provides access for the UE to a core network (CN or 5GC), which then provides access for the UE to other UEs and/or a data network such as a packet data network (e.g., Internet).

TS 23.501 goes on to define a 5G Service-Based Architecture (SBA) which models services as network functions (NFs) that communicate with each other using representational state transfer application programming interfaces (Restful APIs).

Furthermore, 5G Technical Specification (TS) 33.501, entitled "Technical Specification Group Services and System Aspects; Security Architecture and Procedures for the 5G System," the disclosure of which is incorporated by reference herein in its entirety, further describes security management details associated with a 5G network.

Security management is an important consideration in any communication system. However, due to continuing attempts to improve the architectures and protocols associated with a 5G network in order to increase network efficiency and/or subscriber convenience, security management issues associated with user equipment can present a significant challenge. For example, effectively verifying user equipment compliance with one or more communication network standards, e.g., 3rd Generation Partnership Project (3GPP) and/or otherwise, is a technical challenge.

### Summary

Illustrative embodiments provide techniques for verifying user equipment compliance with one or more communication network standards.

In one illustrative embodiment, a method comprises computing, via user equipment, a secure identifier for the user equipment comprising an equipment identifier of the user equipment, and sending the secure identifier comprising the equipment identifier in a request message from the user equipment to a communication network to which the user equipment is attempting to connect.

In another illustrative embodiment, a method comprises receiving, at a first network entity, an authentication request for user equipment attempting to connect to a communication network, wherein the authentication request comprises a secure identifier for the user equipment comprising an equipment identifier of the user equipment. The method further comprises identifying, at the first network entity, the equipment identifier of the user equipment (e.g., which in turn identifies, for the user equipment, the manufacturer, hardware and software capabilities, resources available for a user in support of applications, and compliance to specifications). The method further comprises sending, from the first network entity, a compliance verification request to a second network entity to perform a compliance verification of the user equipment based at least in part on the equipment identifier. The method further comprises permitting, by the first network entity, authentication to proceed when the compliance verification of the user equipment is successful.

In a further illustrative embodiment, a method comprises receiving, at a first network entity, a compliance verification request from a second network entity to perform a compliance verification of user equipment attempting to connect to a communication network. The method further comprises performing, at the first network entity, the compliance verification based on an equipment identifier of the user equipment received by the second network entity as part of a secure identifier for the user equipment. The method further comprises sending, from the first network entity, a compliance verification response to the second network entity to enable the second network entity to permit an authentication to proceed when the compliance verification of the user equipment is successful.

Further illustrative embodiments are provided in the form of a non-transitory computer-readable storage medium having embodied therein executable program code that when executed by a processor causes the processor to perform the above steps. Still further illustrative embodiments comprise an apparatus with a processor and a memory configured to perform the above steps.

Advantageously, illustrative embodiments provide techniques for secure user equipment compliance verification in a communication network environment (e.g., compliance of the user equipment with respect to one or more communication network standards). For example, the communication network performs compliance verification for the user equipment based at least in part on an equipment identifier securely received from the user equipment, e.g., a permanent equipment identifier (PEI) in a subscription concealed identifier (SUCI) computed by the user equipment.

These and other features and advantages of embodiments described herein will become more apparent from the accompanying drawings and the following detailed description.

### Brief Description of the Drawings

FIG. 1 illustrates a communication system with which one or more illustrative embodiments may be implemented.
FIG. 2 illustrates user equipment and network entities with which one or more illustrative embodiments may be implemented.
FIG. 3 illustrates a procedure for computing a secure identifier for user equipment according to an illustrative embodiment.
FIG. 4 illustrates a procedure for user equipment verification according to an illustrative embodiment.
FIG. 5 illustrates a further procedure for user equipment verification according to an illustrative embodiment.

### Detailed Description

Embodiments will be illustrated herein in conjunction with example communication systems and associated techniques for security management in communication systems. It should be understood, however, that the scope of the claims is not limited to particular types of communication systems and/or processes disclosed. Embodiments can be implemented in a wide variety of other types of communication systems, using alternative processes and operations. For example, although illustrated in the context of wireless cellular systems utilizing 3GPP system elements such as a 3GPP next generation system (5G), the disclosed embodiments can be adapted in a straightforward manner to a variety of other types of communication systems.

In accordance with illustrative embodiments implemented in a 5G communication system environment, one or more 3GPP technical specifications (TS) and technical reports (TR) may provide further explanation of network elements/functions and/or operations that may interact with parts of the inventive solutions, e.g., the above-referenced 3GPP TS 23.501, 23.502, and TS 33.501. Other 3GPP TS/TR documents may provide other details that one of ordinary skill in the art will realize. Note that 3GPP TS/TR documents are non-limiting examples of communication network standards (e.g., specifications, procedures, reports, requirements, recommendations, and the like). However, while well-suited for 5G-related 3GPP standards, embodiments are not necessarily intended to be limited to any particular standards.

It is to be understood that the term 5G network, and the like (e.g., 5G system, 5G communication system, 5G environment, 5G communication environment etc.), in some illustrative embodiments, may be understood to comprise all or part of an access network and all or part of a core network. However, the term 5G network, and the like, may also occasionally be used interchangeably herein with the term 5GC network, and the like, without any loss of generality, since one of ordinary skill in the art understands any distinctions.

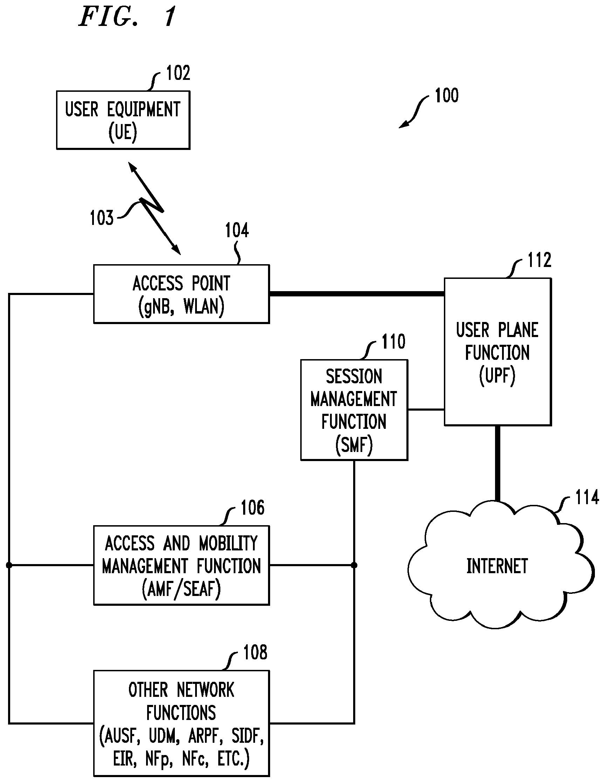

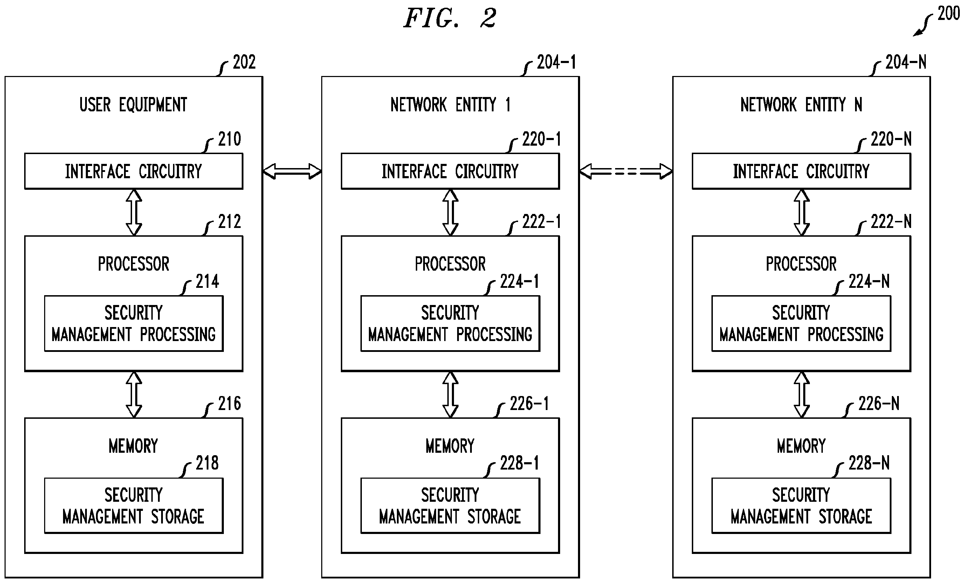

Prior to describing illustrative embodiments, a general description of certain main components of a 5G network will be described below in the context of FIGS. 1 and 2.

FIG. 1 shows a communication system 100 within which illustrative embodiments are implemented. It is to be understood that the elements shown in communication system 100 are intended to represent some main functions provided within the system, e.g., control plane functions, user plane functions, etc. As such, the blocks shown in FIG. 1 reference specific elements in 5G networks that provide some of these main functions. However, other network elements may be used to implement some or all of the main functions represented. Also, it is to be understood that not all functions of a 5G network are depicted in FIG. 1. Rather, at least some functions that facilitate an explanation of illustrative embodiments are represented. Subsequent figures may depict some additional elements/functions (i.e., network entities).

Accordingly, as shown, communication system 100 comprises user equipment (UE) 102 that communicates via an air interface 103 with an access point 104. It is to be understood that UE 102 may use one or more other types of access points (e.g., access functions, networks, etc.) to communicate with the 5GC network other than a gNB. By way of example only, the access point 104 may be any 5G access network (gNB), an untrusted non-3GPP access network that uses an N3IWF (Non-3GPP Interworking Function), a trusted non-3GPP network that uses a TNGF (Trusted Non-3GPP Gateway Function) or wireline access that uses a W-AGF (Wireline Access Gateway Function) or may correspond to a legacy access point (e.g., eNB). Furthermore, access point 104 may be a wireless local area network (WLAN) access point as will be further explained in illustrative embodiments described herein.

The UE 102 may be a mobile station, and such a mobile station may comprise, by way of example, a mobile telephone, a computer, an IoT device, or any other type of communication device. The term "user equipment" as used herein is therefore intended to be construed broadly, so as to encompass a variety of different types of mobile stations, subscriber stations or, more generally, communication devices, including examples such as a combination of a data card inserted in a laptop or other equipment such as a smart phone. Such communication devices are also intended to encompass devices commonly referred to as access terminals.

In one illustrative embodiment, UE 102 is comprised of a Universal Integrated Circuit Card (UICC) part and a Mobile Equipment (ME) part. The UICC is the user-dependent part of the UE and contains at least one Universal Subscriber Identity Module (USIM) and appropriate application software. The USIM securely stores a permanent subscription identifier and its related key, which are used to uniquely identify and authenticate subscribers to access networks. The ME is the user-independent part of the UE and contains terminal equipment (TE) functions and various mobile termination (MT) functions. Alternative illustrative embodiments may not use UICC-based authentication, e.g., an Non-Public (Private) Network (NPN).

Note that, in one example, the permanent subscription identifier is an International Mobile Subscriber Identity (IMSI) unique to the UE. In one embodiment, the IMSI is a fixed 15-digit length and consists of a 3-digit Mobile Country Code (MCC), a 3-digit Mobile Network Code (MNC), and a 9-digit Mobile Station Identification Number (MSIN). In a 5G communication system, an IMSI is referred to as a Subscription Permanent Identifier (SUPI). In the case of an IMSI as a SUPI, the MSIN provides the subscriber identity. Thus, only the MSIN portion of the IMSI typically needs to be encrypted. The MNC and MCC portions of the IMSI provide routing information, used by the serving network to route to the correct home network. When the MSIN of a SUPI is encrypted, it is referred to as Subscription Concealed Identifier (SUCI). Another example of a SUPI uses a Network Access Identifier (NAI). NAI is typically used for IoT communication.

The access point 104 is illustratively part of an access network of the communication system 100. Such an access network may comprise, for example, a 5G System having a plurality of base stations.

Further, the access point 104 in this illustrative embodiment is operatively coupled to an Access and Mobility Management Function (AMF/SEAF) 106. In a 5G network, the AMF/SEAF supports, inter alia, mobility management (MM) and security anchor (SEAF) functions.

AMF/SEAF 106 in this illustrative embodiment is operatively coupled to (e.g., uses the services of) other network functions 108. As shown, some of these other network functions 108 include, but are not limited to, an Authentication Server Function (AUSF), a Unified Data Management (UDM) function, an Authentication Credential Repository and Processing Function (ARPF), a Security Identifier De-Concealing Function (SIDR), and an Equipment Identity Register (EIR). These listed network function examples are typically implemented in the home network of the UE subscriber, further explained below. Note that, in a SGC network, the 4G function of the HSS (home subscriber server) is split into the AUSF, UDM, and a Unified Data Repository (UDR, not expressly shown) functions. Typically, AUSF authenticates UEs and provides any needed cryptographic keys, while UDR stores the user data and UDM manages the user data. The ARPF is a functional element of the UDM and is responsible for generating authentication information (e.g., authentication vectors or AV) based on the UE subscriber's shared secret key. The SIDR is also a functional element of the UDM and is responsible for decrypting a SUCI to obtain its long-term identity, namely the SUPI, e.g., the IMSI. The EIR is a SGC network function responsible for checking the status of the Permanent Equipment Identifier (PEI) of the UE to determine that the UE is not unknown or banned for some reason(s).

Other network functions 108 may include network functions that can act as service producers (NFp) and/or service consumers (NFc). Note that any network function can be a service producer for one service and a service consumer for another service. Further, when the service being provided includes data, the data-providing NFp is referred to as a data producer, while the data-requesting NFc is referred to as a data consumer. A data producer may also be an NF that generates data by modifying or otherwise processing data produced by another NF.

Note that a UE, such as UE 102, is typically subscribed to what is referred to as a Home Public Land Mobile Network (HPLMN) in which some or all of the functions 106 and 108 reside. Alternatively the UE, such as UE 102, may receive services from an NPN where these functions may reside. The HPLMN is also referred to as the Home Environment (HE). If the UE is roaming (not in the HPLMN), it is typically connected with a Visited Public Land Mobile Network (VPLMN) also referred to as a visited network, while the network that is currently serving the UE is also referred to as a serving network. In the roaming case, some of the network functions 106 and 108 can reside in the VPLMN, in which case, functions in the VPLMN communicate with functions in the HPLMN as needed. However, in a non-roaming scenario, mobility management functions 106 and the other network functions 108 reside in the same communication network, i.e. HPLMN. Embodiments described herein, unless otherwise specified, are not necessarily limited by which functions reside in which PLMN (i.e., HPLMN or VPLMN).

The access point 104 is also operatively coupled (via one or more of functions 106 and/or 108) to a Session Management Function (SMF) 110, which is operatively coupled to a User Plane Function (UPF) 112. UPF 112 is operatively coupled to a Packet Data Network, e.g., Internet 114. Note that the thicker solid lines in this figure denote a user plane (UP) of the communication network, as compared to the thinner solid lines that denote a control plane (CP) of the communication network. It is to be appreciated that network (e.g., Internet) 114 in FIG. 1 may additionally or alternatively represent other network infrastructures including, but not limited to, cloud computing infrastructure and/or edge computing infrastructure. Further typical operations and functions of such network elements are not described here since they are not the focus of the illustrative embodiments and may be found in appropriate 3GPP 5G documentation. Note that functions shown in 106, 108, 110 and 112 are examples of network functions (NFs).

It is to be appreciated that this particular arrangement of system elements is an example only, and other types and arrangements of additional or alternative elements can be used to implement a communication system in other embodiments. For example, in other embodiments, the communication system 100 may comprise other elements/functions not expressly shown herein.

Accordingly, the FIG. 1 arrangement is just one example configuration of a wireless cellular system, and numerous alternative configurations of system elements may be used. For example, although only single elements/functions are shown in the FIG. 1 embodiment, this is for simplicity and clarity of description only. A given alternative embodiment may of course include larger numbers of such system elements, as well as additional or alternative elements of a type commonly associated with conventional system implementations.

It is also to be noted that while FIG. 1 illustrates system elements as singular functional blocks, the various subnetworks that make up the 5G network are partitioned into so-called network slices. Network slices (network partitions) are logical networks that provide specific network capabilities and network characteristics that can support a corresponding service type, optionally using network function virtualization (NFV) on a common physical infrastructure. With NFV, network slices are instantiated as needed for a given service, e.g., eMBB service, massive IoT service, and mission-critical IoT service. A network slice or function is thus instantiated when an instance of that network slice or function is created. In some embodiments, this involves installing or otherwise running the network slice or function on one or more host devices of the underlying physical infrastructure. UE 102 is configured to access one or more of these services via access point 104.

FIG. 2 is a block diagram illustrating computing architectures for various participants in methodologies according to illustrative embodiments. More particularly, system 200 is shown comprising user equipment (UE) 202 and a plurality of network entities 204-1, .... , 204-N. For example, in illustrative embodiments and with reference back to FIG. 1, UE 202 can represent UE 102, while network entities 204-1, ... , 204-N can represent functions 106 and 108. It is to be appreciated that the UE 202 and network entities 204-1, .... , 204-N are configured to interact to provide security management and other techniques described herein.

The user equipment 202 comprises a processor 212 coupled to a memory 216 and interface circuitry 210. The processor 212 of the user equipment 202 includes a security management processing module 214 that may be implemented at least in part in the form of software executed by the processor. The processing module 214 performs security management described in conjunction with subsequent figures and otherwise herein. The memory 216 of the user equipment 202 includes a security management storage module 218 that stores data generated or otherwise used during security management operations.

Each of the network entities (individually or collectively referred to herein as 204) comprises a processor 222 (222-1, ..., 222-N) coupled to a memory 226 (226-1, ..., 226-N) and interface circuitry 220 (220-1, ... , 220-N). Each processor 222 of each network entity 204 includes a security management processing module 224 (224-1, ..., 224-N) that may be implemented at least in part in the form of software executed by the processor 222. The processing module 224 performs security management operations described in conjunction with subsequent figures and otherwise herein. Each memory 226 of each network entity 204 includes a security management storage module 228 (228-1, ... , 228-N) that stores data generated or otherwise used during security management operations.

The processors 212 and 222 may comprise, for example, microprocessors such as central processing units (CPUs), application-specific integrated circuits (ASICs), digital signal processors (DSPs) or other types of processing devices, as well as portions or combinations of such elements.

The memories 216 and 226 may be used to store one or more software programs that are executed by the respective processors 212 and 222 to implement at least a portion of the functionality described herein. For example, security management operations and other functionality as described in conjunction with subsequent figures and otherwise herein may be implemented in a straightforward manner using software code executed by processors 212 and 222.

A given one of the memories 216 and 226 may therefore be viewed as an example of what is more generally referred to herein as a computer program product or still more generally as a processor-readable storage medium that has executable program code embodied therein. Other examples of processor-readable storage media may include disks or other types of magnetic or optical media, in any combination. Illustrative embodiments can include articles of manufacture comprising such computer program products or other processor-readable storage media.

Further, the memories 216 and 226 may more particularly comprise, for example, electronic random-access memory (RAM) such as static RAM (SRAM), dynamic RAM (DRAM) or other types of volatile or non-volatile electronic memory. The latter may include, for example, non-volatile memories such as flash memory, magnetic RAM (MRAM), phase-change RAM (PC-RAM) or ferroelectric RAM (FRAM). The term "memory" as used herein is intended to be broadly construed, and may additionally or alternatively encompass, for example, a read-only memory (ROM), a disk-based memory, or other type of storage device, as well as portions or combinations of such devices.

The interface circuitries 210 and 220 illustratively comprise transceivers or other communication hardware or firmware that allows the associated system elements to communicate with one another in the manner described herein.

It is apparent from FIG. 2 that user equipment 202 and plurality of network entities 204 are configured for communication with each other as security management participants via their respective interface circuitries 210 and 220. This communication involves each participant sending data to and/or receiving data from one or more of the other participants. The term "data" as used herein is intended to be construed broadly, so as to encompass any type of information that may be sent between participants including, but not limited to, identity data, key pairs, key indicators, tokens, secrets, security management messages, registration request/response messages and data, request/response messages, authentication request/response messages and data, metadata, control data, audio, video, multimedia, consent data, other messages, etc.

It is to be appreciated that the particular arrangement of components shown in FIG. 2 is an example only, and numerous alternative configurations may be used in other embodiments. For example, any given network element/function can be configured to incorporate additional or alternative components and to support other communication protocols.

Other system elements such as access point 104, SMF 110, and UPF 112 may each be configured to include components such as a processor, memory and network interface. These elements need not be implemented on separate stand-alone processing platforms, but could instead, for example, represent different functional portions of a single common processing platform.

More generally, FIG. 2 can be considered to represent processing devices configured to provide respective security management functionalities and operatively coupled to one another in a communication system.

As mentioned above, the 3GPP TS 23.501 defines the SGC network architecture as service-based, e.g., Service-Based Architecture (SBA). It is realized herein that in deploying different NFs, there can be many situations where an NF may need to interact with an entity external to the SBA-based SGC network (e.g., including the corresponding PLMN(s), e.g., HPLMN and VPLMN). Thus, the term "internal" as used herein illustratively refers to operations and/or communications within the SBA-based SGC network (e.g., SBA-based interfaces) and the term "external" illustratively refers to operations and/or communications outside the SBA-based SGC network (non-SBA interfaces).

Given the above general description of some features of a SGC network, problems with existing security approaches in the context of a UE standards compliance, and solutions proposed in accordance with illustrative embodiments, will now be described herein below.

Currently in 5G networks there is no procedure defined to verify whether the particular UE or the device and its manufacture version is compliant to the 3GPP specifications and procedures. Though various conformance specifications have been specified in 3GPP, such as, e.g., TS 38.522 entitled "Technical Specification Group Radio Access Network; NR; User Equipment (UE) Conformance Specification; Applicability of Radio Transmission, Radio Reception and Radio Resource Management Test Cases," the disclosure of which is incorporated by reference herein in its entirety, this conformance certification is not verified when the UE connects to a communication network. Certain UE vendors also do not get their device certified for compliance to standard specifications and such devices may create problems in different parts of the world, violating regional laws on radio frequency (RF) emissions, bands etc. Resource requirements on hardware resources, computing abilities, memories, etc., are also necessary to be fulfilled when connecting to the communication network.

While there have been UE compliance verification proposals, none of them are secure. That is, even when applying existing proposals, UEs can claim compliance without any cross verification and therefore misinform the communication network.

Illustrative embodiments overcome the above and other technical problems with existing UE compliance proposals by providing secure UE compliance verification methodologies.

For example, one or more illustrative embodiments are configured to implement one or more of the following features:
(1) Identify a compliance status of the UE through the existing EIR using the PEI of the UE. As a secondary additional step, if there is a compliance certificate provisioned in the UE, this certificate could also be verified.
(2) Incorporate the UE compliance verification procedure into the initial 5G authentication authorization protocols to ensure security and trust in the compliance verification procedure.
(3) Enhance the 5G authentication protocols, 5G AKA, EAP-AKA' and EAP Transport Layer Security (TLS) defined in the above-referenced TS 33.501 to include this compliance verification.
(4) Based on the configuration information in the UE, the UE generates a SUCI in a new format, i.e., an encrypted permanent subscription identifier SUPI with one or more additional fields to additionally contain the Permanent Equipment Identifier (PEI) of the UE.
(5) The UE generates the SUCI as it is done in existing procedure(s), i.e., either in the USIM, if the SUCI generation is enabled in the UE, or outside of the USIM in the ME, if this is how it has been configured. The UE sends the initial registration request (REG-REQ) message to the communication network using the SUCI in the new format.
(6) In the HPLMN, the received SUCI is de-concealed by the SIDF of the UDM. The securely transmitted SUPI along with PEI is identified.
(7) The HPLMN UDM uses the PEI to verify the compliance status of the UE and its equipment version along with firmware with updated 5G EIR. The UDM sends the PEI to the EIR and compliance status is requested from the database.
(8) If the UE compliance check is not successful, then UDM does not allow the authentication to proceed, the authentication is declared failed and an error code is sent to the UE due to compliance failure. A new error code is defined to indicate the authentication failure due to the compliance check failure scenario.
(9) If an additional compliance certificate verification is required/desired as part of the compliance verification, this can be accomplished in two steps. In the first step, the primary authentication is completed if the PEI based verification succeeds. At the end of the primary authentication, a UE Parameter Update (UPU) procedure is initiated by the UDM requesting the UE to report back the certificate number. The certificate and the number are verified by the UDM with the assistance of an enhanced EIR, i.e., enhanced with compliance certificates per PEI. Only after the successful completion of the compliance certificate, the UE is authorized for service in the network.
(10) If the CN fetches the PEI after authentication, it may be compared with the PEI captured with the SUCI previously for verification.

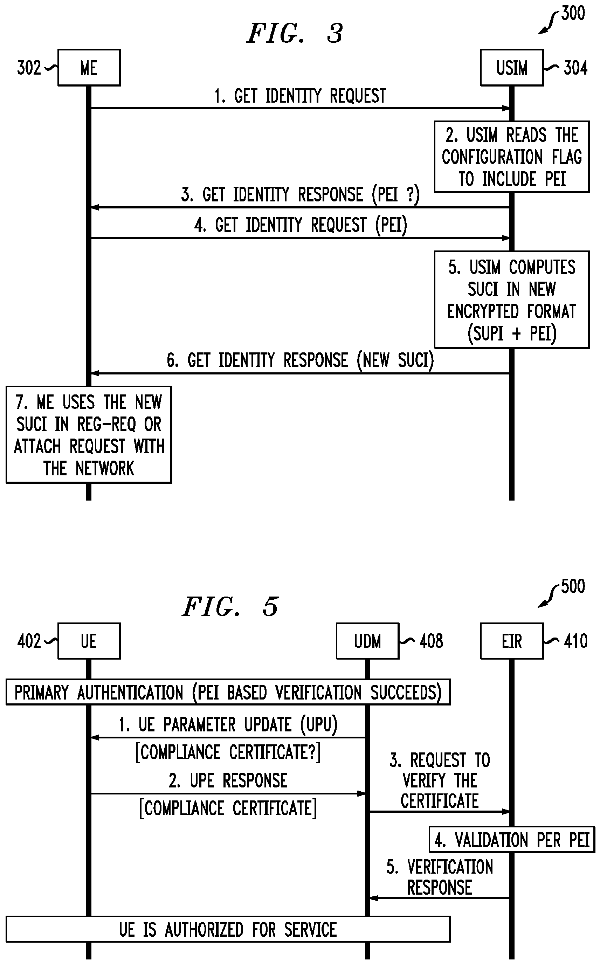

The above features are illustrated in FIGS. 3, 4 and 5, as will now be explained.

FIG. 3 illustrates a procedure 300 for computing a secure identifier for user equipment according to an illustrative embodiment. More particularly, procedure 300 corresponds to computation of a newly formatted SUCI (new SUCI) performed in accordance with ME 302 and USIM 304 associated with a given UE. The following steps of procedure 300 correspond to the numbers labeled in the figure.

The SUCI computation occurs in USIM 304. The public key of the HPLMN to encrypt the SUPI is stored in USIM 304, so when ME 302 wants to register the UE into the network, firstly ME 302 sends a GET IDENTITY REQUEST (step 1) to USIM 304 to get the SUCI, e.g., see 3GPP TS 31.102 entitled "Technical Specification Group Core Network and Terminals; Characteristics of the Universal Subscriber Identity Module (USIM) Application," the disclosure of which is incorporated by reference herein in its entirety.

If the HPLMN wants to verify the UE compliance, it provisions an elementary file (with a corresponding configuration flag) in USIM 304 to also include the PEI in the SUCI. Thus, USIM 304 reads the configuration flag in the file (step 2). Note that the PEI cannot be part of USIM 304, but it is stored in the hardware of ME 302. Hence, when USIM 304 receives the GET IDENTITY REQUEST message from ME 302, it requests the ME to provision the PEI in a GET IDENTITY RESPONSE message (step 3).

ME 302 responds with another GET IDENTITY REQUEST message, this time with PEI included (step 4). Using the received PEI, USIM 304 can compute (step 5) the SUCI in a new encrypted format (SUPI + PEI), and returns the new SUCI in another GET IDENTITY RESPONSE message (step 6). ME 302 then uses the new SUCI in a REG-REQ or Attach Request with the network (step 7).

Following the computation of the newly formatted SUCI, 5G Authentication and Key Agreement (AKA) using the newly formatted SUCI or Extensible Authentication Protocol - Authentication and Key Agreement (EAP-AKA') using the newly formatted SUCI is performed. UDM/SIDF initiates PEI verification. UDM/SIDF initiates compliance certificate verification with the EIR if so required/desired. It is to be noted that the compliance verification towards the EIR from the UDM/SIDF is common to 5G AKA and EAP-AKA'.

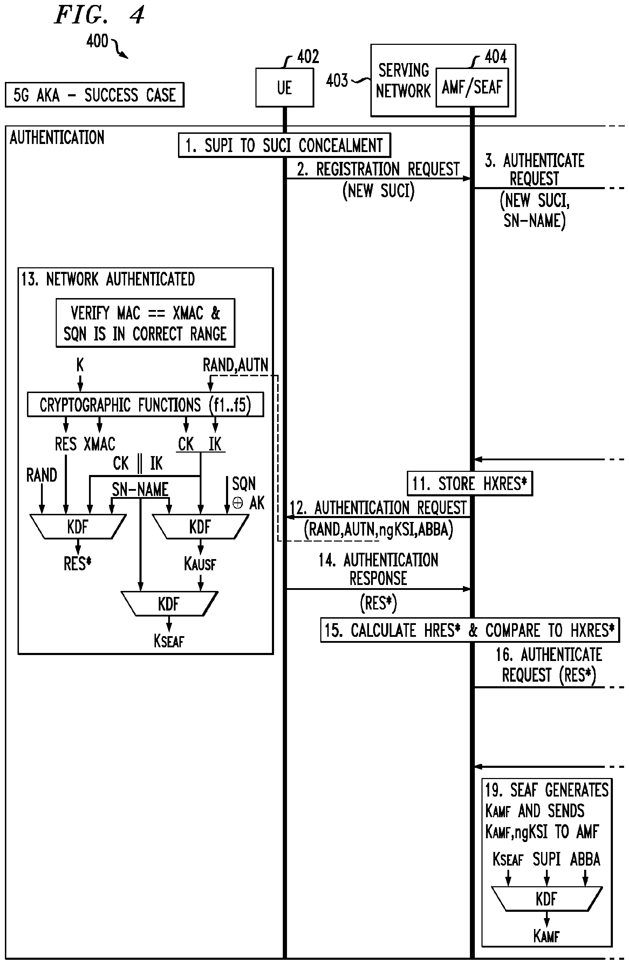

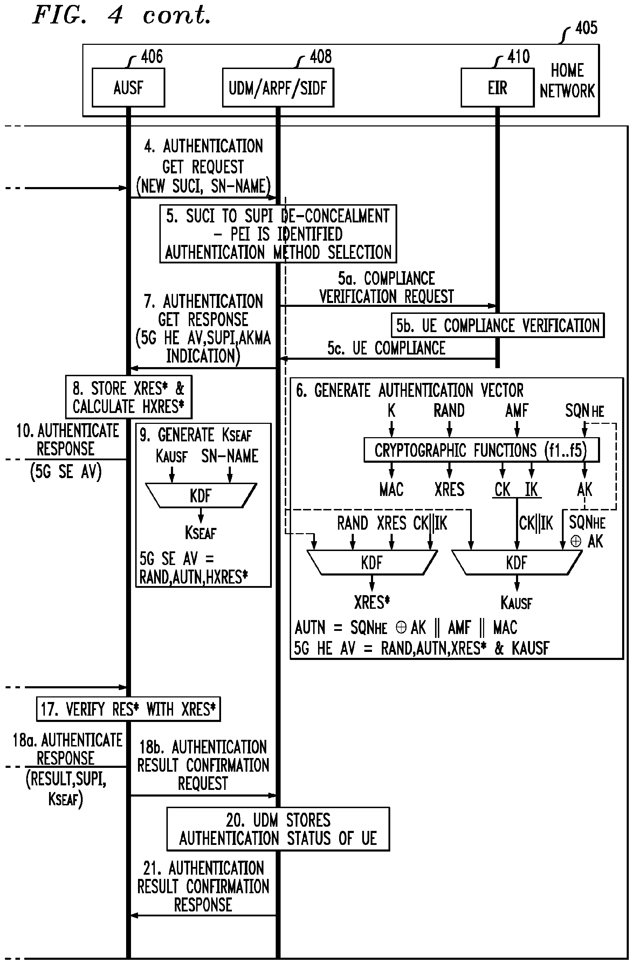

FIG. 4 illustrates a procedure 400 for user equipment verification according to an illustrative embodiment. Procedure 400 involves the UE 402 (assumed to be configured to perform procedure 300 of FIG. 3), serving network 403 (e.g., VPLMN) with AMF/SEAF 404, and a home network 405 (e.g., HPLMN) with AUSF 406, UDM/ARPF/SIDF 408, and EIR 410. The following steps of procedure 400 correspond to the numbers labeled in the figure.

More particularly, certain ones of steps 1 through 21 depict typical authentication and key agreement steps but which are performed using the newly formatted SUCI in accordance with the illustrative embodiment. Thus, such typical authentication and key agreement will not be described in detail, however, will be fully understood from FIG. 4 by those of ordinary skill in the art.

Accordingly, it is to be understood as shown in steps 1, 2, 3 and 4, the new SUCI is used as part of the typical authentication steps. In step 5, the PEI in the new SUCI is identified by UDM/ARPF/SIDF 408. With the PEI, UDM/ARPF/SIDF 408 identifies, for UE 402, the manufacturer, hardware and software capabilities, resources available for a user in support of applications, and compliance to specifications. Then, in steps Sa., 5b., and Sc., UDM/ARPF/SIDF 408 and (enhanced) EIR 410 verify compliance of UE 402.

Once verified, then typical key agreement in steps 6-21 is performed.

Additionally, if compliance certificate verification is required/desired, as indicated in the features above, a UPU procedure may be triggered by the UDM after primary authentication prior to the final authorization of the UE for service in the network.

FIG. 5 illustrates a procedure 500 for performing such compliance certificate verification according to an illustrative embodiment. For consistency of reference, procedure 500 involves the same entities as FIG. 4 (note that UDM/ARPF/SIDF 408 is simply referenced as UDM 408 in FIG. 5). The following steps of procedure 500 correspond to the numbers labeled in the figure.

Assuming primary authentication with PIE-based verification (procedure 400) is successful, UDM 408 initiates the UPU procedure with UE 402 (step 1). UE 402 responds with a UPU response including its compliance certificate (step 2). UDM 408 sends a request to EIR 410 to verify the compliance certificate from UE 402 (step 3). EIR 410 validates the certificate based on the PEI (step 4) and sends a verification response to UDM 408 (step 5). UE 402 is now authorized for service.

As used herein, it is to be understood that the term "communication network" in some embodiments can comprise two or more separate communication networks. Further, the particular processing operations and other system functionality described in conjunction with the diagrams described herein are presented by way of illustrative example only and should not be construed as limiting the scope of the disclosure in any way. Alternative embodiments can use other types of processing operations and messaging protocols. For example, the ordering of the steps may be varied in other embodiments, or certain steps may be performed at least in part concurrently with one another rather than serially. Also, one or more of the steps may be repeated periodically, or multiple instances of the methods can be performed in parallel with one another.

It should again be emphasized that the various embodiments described herein are presented by way of illustrative example only and should not be construed as limiting the scope of the claims. For example, alternative embodiments can utilize different communication system configurations, user equipment configurations, base station configurations, provisioning and usage processes, messaging protocols and message formats than those described above in the context of the illustrative embodiments. These and numerous other alternative embodiments within the scope of the appended claims will be readily apparent to those skilled in the art.

## Claims

1. An apparatus comprising means for:
computing a secure identifier for the apparatus comprising an equipment identifier of the apparatus; and
sending the secure identifier comprising the equipment identifier in a request message to a communication network to which the apparatus is attempting to connect.

2. The apparatus of claim 1, wherein the secure identifier comprises a subscription concealed identifier adapted to comprise a permanent equipment identifier.

3. The apparatus of claim 1 or 2, wherein the apparatus is part of user equipment and the secure identifier is computed in one of a universal subscriber identity module or a mobile equipment module of the user equipment.

4. The apparatus of any of claims 1-3, further comprising means for:
receiving a message from the communication network indicating that a compliance verification check based at least in part on the equipment identifier has failed.

5. A method comprising:
computing, via user equipment, a secure identifier for the user equipment comprising an equipment identifier of the user equipment; and
sending the secure identifier comprising the equipment identifier in a request message from the user equipment to a communication network to which the user equipment is attempting to connect.

6. An apparatus comprising means for:
receiving an authentication request for user equipment attempting to connect to a communication network, wherein the authentication request comprises a secure identifier for the user equipment comprising an equipment identifier of the user equipment;
identifying the equipment identifier of the user equipment;
sending a compliance verification request to a network entity to perform a compliance verification of the user equipment based at least in part on the equipment identifier; and
permitting authentication to proceed when the compliance verification of the user equipment is successful.

7. The apparatus of claim 6, wherein the secure identifier comprises a subscription concealed identifier computed by the user equipment to comprise a permanent equipment identifier.

8. The apparatus of claim 6 or 7, further comprising means for:
requesting a compliance certificate for the user equipment;
receiving the compliance certificate for the user equipment;
sending a request to verify the compliance certificate to a network entity; and
authorizing the user equipment when the compliance certificate of the user equipment is verified by the network entity.

9. The apparatus of claim 8, wherein the compliance certificate is requested during a parameter update procedure associated with the user equipment.

10. The apparatus of claim 8, wherein the compliance certificate is requested following successful authentication of the user equipment.

11. The apparatus of any of claims 6-10, wherein the apparatus is part of a unified data management function.

12. An apparatus comprising means for:
receiving a compliance verification request from a network entity to perform a compliance verification of user equipment attempting to connect to a communication network;
performing the compliance verification based on an equipment identifier of the user equipment received by the network entity as part of a secure identifier for the user equipment; and
sending a compliance verification response to the network entity to enable the network entity to permit an authentication to proceed when the compliance verification of the user equipment is successful.

13. The apparatus of claim 12, wherein the secure identifier comprises a subscription concealed identifier computed by the user equipment to comprise a permanent equipment identifier.

14. The apparatus of claim 12 or 13, further comprising means for:
receiving a request from the network entity to verify a compliance certificate received from the user equipment;
performing the compliance certificate verification based on the equipment identifier of the user equipment; and
sending a compliance certificate verification response to the network entity to enable the network entity to authorize the user equipment when the compliance certificate verification of the user equipment is successful.

15. The apparatus of any of claims 12-14, wherein the apparatus is part of an equipment identity register.
